Europäisches Patentamt

European Patent Office

Office européen des brevets

(11) Publication number: 0 271 984
A2

## EUROPEAN PATENT APPLICATION

(21) Application number: 87309576.4

(22) Date of filing: 29.10.87

(51) Int. Cl.4: **B29C 45/14** , B29C 45/16 ,
F16J 15/10

(30) Priority: 15.12.86 US 941675

(43) Date of publication of application:
22.06.88 Bulletin 88/25

(84) Designated Contracting States:
AT BE CH DE ES FR GB GR IT LI LU NL SE

(71) Applicant: Hercules Products, Inc.
3700 Mayflower Drive
Lynchburg, VA 24501(US)

(72) Inventor: Hawkes, Steven F.
R.R. No. 4, Box 197
Madison Heights, VA 42572(US)

(74) Representative: Warren, Anthony Robert et al
BARON & WARREN 18 South End Kensington
London W8 5BU(GB)

(54) Two-part gasket.

(57) The invention relates to a method of making a
two-part gasket (10) of the type in which a second
plastic component (15) is injection molded under
high pressure into a groove (20) formed in a pre-
viously molded support plastic component (12), and
in which the support component is subject to sink or
differential shrinkage after molding. Flashing of the
second component (15) over the face surfaces (21,
22) of the support component (12) is prevented by
raised lips (30) adjacent to the margin of the grooves
formed in the support component to receive the
second component. The lips are crushed by flat
surfaces in the mold beyond the elastic limit of the
lips to form high pressure barriers along the mar-
gins.

FIG-3

FIG-2

EP 0 271 984 A2

## TWO-PART GASKET

This invention relates to methods of making two-part gaskets in which a second component formed of plastic material is injection molded under high pressure into a receptacle or groove formed in a first plastic component.

Low cost high performance gaskets and pressure sealing devices may made by the serial injection molding, that is, by the forming of a plastic support or substrate, followed by the molding of a second material or component with a groove or a recess formed in the first component. Commonly, the first component is formed of a rigid support material, such as nylon, and the second component may be a thermoplastic material, such as a silicone compound. In the manufacture of such seals and gaskets, it is necessary to insert the preformed component into a mold cavity and then mold the second component into the recesses or grooves provided therefore, and without flashing of the material forming the second component over the surfaces of the first component. This requires that the mold parts close completely and accurately about the first component, in defining the mold cavities and passageways which define the second component.

Since the injection of the second component is under elevated temperature, and since it is often desirable to preheat the first component prior to insertion into the mold cavity, there is a limit as to the amount of closing pressure which can be applied to assure a flash proof seal at the various interfaces between the mold cavities and the first plastic component.

The problem of forming an adequate seal, in the mold, is made more difficult by reason of factors which tend to cause the substrate material to vary in thickness, warp, or sink following molding and tooling. The sinking or differential shrinkage of parts is prominent in crystaline thermoplastics, such as nylon, acetal, and thermoplastic polyesters are used in many demanding application which require resistance to both heat and chemical. Differential shrinking is the greatest where the part thickness is the greatest, and compounds the problem of forming an adequate seal at the interfaces between the first component and the closing surfaces of the mold for the second component. When the second component is injection molded, unwanted flashings of the second component commonly occur as the result of extrusions out of the confined cavity defined by the mold and over the surface of the insert. Such differential shrinkage can increase the likelihood that the component will be inconsistent in thickness in the critical sealing areas and thus such differential shrinkage tends to decrease the quality of the overall sealing gasket.

One aspect of the invention is directed to the method of making two-part gasket in which a second thermoplastic polymer, forming a sealing material, is injection molded into a slot, passageway, or groove formed in a first relatively rigid plastic support component. A raised continuous portion, such as a lip, is formed on the first component adjacent the margins of the passageway or groove for the second component. The raised portion forms a high spot or elevated region which, in the mold, is engaged by a surface of the mold, which may be a flat surface, with a pressure which exceeds the elastic limit of the raised portion at the molding temperature, to form a high pressure seal or barrier immediately adjacent to the margins of the groove. This high pressure seal or barrier compensates for any irregularities in the surface of the first component due to warpage or shrinkage and assumes the formation of a part without flashover. The method of making a two-part gasket improves the sealing capability of the gasket in that it eliminates inconsistent part heights or thicknesses in the sealing area. This reduces the possible extrusion gap of the seal and improves seal performance and useful life.

When the first component is closed in a heated mold, such lips are crushed or compressed under heat and pressure beyond their elastic limit, and thus form high pressure barriers at the groove margins. These barriers are not apparent after the part is removed from the mold. A finished part is formed in which the formerly elevated or raised lips are reformed flush with the surface of the part and in which the second sealing component, which may be a silicone elastomer, is accurately positioned and supported on the first part, free of flashings over the surface of the first part. Also, the finished gasket has dimensional accuracy in the sealing areas.

The method of making a two-part gasket includes the steps of supporting a gasket component in a mold which has cavities which are complementary to grooves in the component and which define the outer shape of the bead and form which high pressure seals between the mold and the substrate to prevent the flashing of the thermoplastic material out of the mold grooves. The component is deformed at localized regions immediately outward of the grooves and adjacent the groove margins. The deformation is beyond the elastic limit of the component. The molding of a second material is accomplished while maintaining these seals between the mold and the component sheet.

The invention may further be described as a method of making a two-part gasket of the type in which a thermoplastic sealing component is injection molded in a mold under high pressure with in a groove formed in a plastic support component such as a preformed thermoset component, and in which the component is formed with elevated or raised lips which are positioned adjacent the groove along the opposite margins of the groove, characterized by the steps of enclosing this present component in a mold which has surfaces which engage the component at the lips and crush the lips under heat and pressure beyond the elastic limit of the lips to form high pressure barriers along the margins of the groove, and while maintaining this pressure, injection molding a thermoplastic sealing component into the groove.

In order that the invention may be more readily understood, reference will now be made to the accompanying drawings, in which:

Fig. 1 is a perspective view of an intake manifold gasket for an internal combustion engine made according to this invention;

Fig. 2 is a fragmentary enlarged elevation of a portion of the gasket of Fig. 1, with a portion of the bead removed to expose the groove;

Fig. 3 is an enlarged fragmentary section of the gasket taken generally along line 3--3 of Fig. 2 prior to the injection molding of a sealing elastomer, forming a second component, and showing the complementary grooves in the base component;

Fig. 4 is a sectional view similar to Fig. 3, showing fragments of the upper and lower mold halves and showing the second component after molding; and,

Fig. 5 is an enlarged detail of the margin region of the groove in the first gasket component, showing the configuration of the pressure lip at the groove.

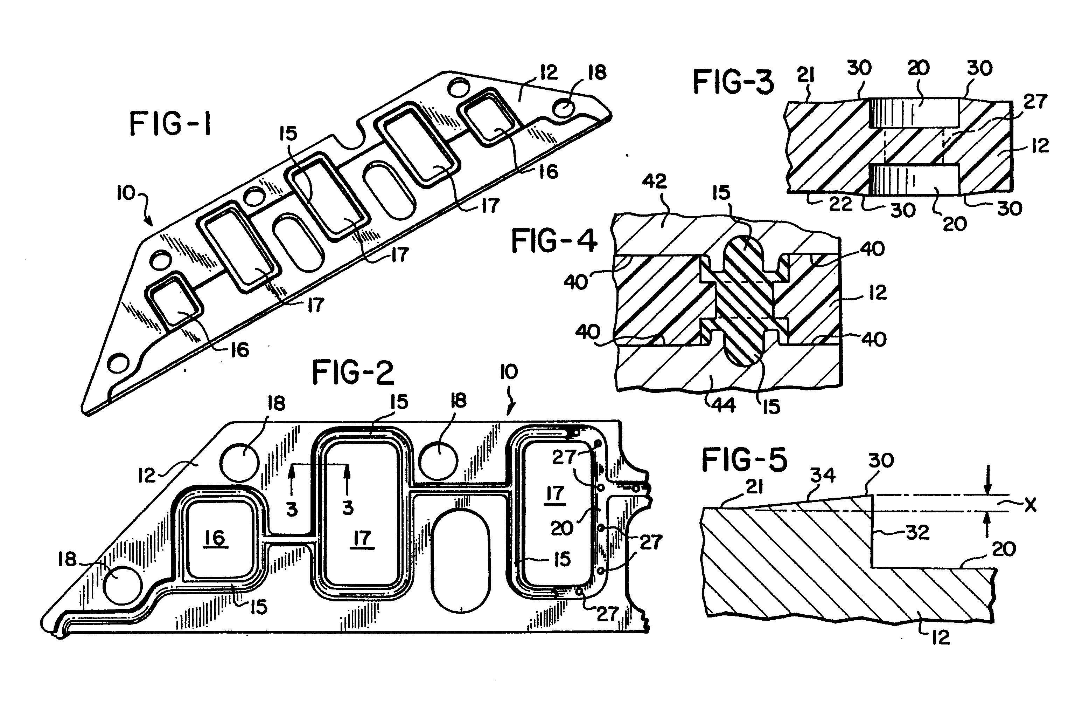

Referring to the figures of the drawing, a two-part gasket for an intake manifold for a V-6 internal combustion engine is illustrated generally at 10 in Figs. 1 and 2. The gasket 10 is referred to as a two-part type in that a support component 12, which forms the major part of the gasket 10, provides or forms the base or substrate for a second component 15, usually in the form of a bead of more conforming or flexible sealing material as compared to the material of the support component. In this embodiment shown, the support component 12 is preformed as a relatively rigid sheet of thermoset material, such as glass-filled nylon, which is molded to the overall shape of the gasket, usually by injection-molding into a corresponding mold cavity. The necessary locating bosses and clearance openings, forming part of the gasket configuration, are molded into the part, including, in this example, water jacket openings 16, intake manifold openings 17, and bolt-clearance openings 18. The second component, which may be a thermoplastic such as high-temperature silicone elastomer, is thereafter applied to the opposite surfaces of the first component 12, into channels or grooves 20 formed in a first component in surrounding relation to the fluid-carrying openings 16 and 17 to be sealed.

The gasket 10 is symmetrical in that complementary grooves 20 are formed in each of the opposite, generally planar faces 21 and 22, as shown by the sectional view of Fig. 3. The grooves define the paths and supports for the second plastic material or component of the gasket; that is, for the bead 25 to be applied to the base component 12, as shown in section in Fig. 4. Through openings 27 are formed through the substrate in the region of the grooves, in spaced-apart relation, to form integral connecting webs extending transversely between the beads, and connecting the beads to each other and to the substrate 12. The spacing, number, and size of such through-openings 27 is a matter of engineering design, as is well understood in the art of making two-part gaskets.

As previously mentioned, the first component is subjected to differential shrinkage, usually proportional to the mass of the part, resulting in "sink" of the opposite surfaces 21 and 22. Thus, when this component is placed in a mold, for the application of the second component 15, usually by injection molding under high pressure and at elevated temperature, it is extremely difficult to assure confinement of the injected material to the mold configuration without undesired flashing out of the grooves 20 and over the adjacent surfaces of the gasket. Such flashing is eliminated, according to this invention, by the creation of high-pressure seals along the opposite margins of the grooves, to confine the second component during molding.

High pressure seals are formed at raised portions in the form of pairs of raised lips 30 on the surface of the first component 12. The lips are formed in continuous paths, along the margins of grooves 20. As shown in the enlarged detail of Fig. 5, each lip 30 is preferably in the form of an incline or wedge, which has its greatest height at the grooves wall 32, and blends with the adjoining gasket surface along a straight line 34. The elevation of the lip 30, at the wall 32, may be in the order of 2% to 10% of the total thickness of the gasket at this region, and the slope of the line 34, which is not critical, may be in the order of 5° to 10° to accommodate the lip. In a typical example, the component 12 may have a total average thickness of 0.120 inch, and the elevation of the lip 30, above the surface, as represented by the distance "X", may be in the order of 0.006 inch. It should be understood that this invention is not intended to be limited to the precise form of seal shown, and other configurations may be used to form such a pressure seal, including a rectangle or half-round on the respective surfaces.

The lips 30 define localized regions of high-pressure sealing contact with the engaging flat surfaces 40 of the second mold halves 42 and 44. At the usual elevated molding temperatures, which may be in the order of 300-400°F, the first component will be heated to a temperature less than its original injection or melt temperature, and will be reduced in strength, such as to 20-30% of full strength. The lips are crushed or displaced by the adjacent flat mold surfaces 40 beyond the elastic limit of the material at this temperature and flush with the adjoining or surrounding surface 21 or 22, to form the high pressure seal. When the second component is then injected at high pressure, which may exceed 2,000 psi along the grooves 20 and into a bead as defined by the shape of the confining mold halves as shown in the sectional view of Fig. 4, the second material is confined as desired, and flashing through the interfaces between the mold surfaces and the first component 12 is eliminated. The mass, or volume, of the lip 30 is small compared to that of the remaining gasket portion underlying the lip, so that the small displacement of material, when the lip is displaced, does not adversely affect the finished part. Also, since the new surface defined at the place where the lip 30 formerly had been has been formed not during the initial molding of the first component, but during its reheating and the molding of the second component, this newly formed high pressure surface is substantially free of subsequent dimensional changes and provides an accurate locating surface for the completed part. In other words, the reforming of the lips essentially flush to the respective surfaces 21 or 22 is accomplished below the melt temperature of the material of the first component, and is accomplished at a time when the first component is now dimensionally stable so that the resulting surfaces may accurately define locating surfaces for such a gasket in use, and will accurately define the extent to which the second component is distorted in use.

The use of a raised or elevated seal region on the first component, in combination with flat surfaces on the mold halves, enhances the life of the molds, as compared to a configuration where the roles are reversed; that is, where the lip is formed on the mold parts. However, it is intended that the method and products of the invention may be practiced by formation of narrow high pressure paths along the grooves margins, by the provision of lips or protrusions on the mold surfaces, at the groove margins, which deform or crush the underlying first component beyond the elastic limit of the part, to form a high pressure seal.

## Claims

1. The method of making a two-part gasket (10) in which a thermoplastic sealing component (15) is injection molded under high pressure into a groove (20) formed in a preformed thermoset plastic support component (12), and in which the said support component has raised lips positioned adjacent said groove along the opposite margins thereof, characterized by enclosing said support component in a mold (42, 44) having surfaces (40) engageable with said component at said lips (30) and crushing the lips by the application of heat and pressure beyond the elastic limit of the lips to form high pressure barriers along the margins of said grooves, and while maintaining said pressure, injection molding said thermoplastic component into said groove.

2. The method of claim 2, in which said mold surfaces are heated.

3. The method of claim 1 or 2, in which said lips are elevated by an amount which is between 2% and 10% of average thickness of the support component.

4. The method of claim 1,2 or 3, in which said lips are formed with an incline of between 5° and 10° to the plane of one of the surfaces of said component.

5. The method of any preceding claim,in which grooves are formed in each of said opposite surfaces of the support comonent.

6. The gasket made according to the method of any preceding claim.